(19) Europäisches Patentamt / European Patent Office / Office européen des brevets

(11) **EP 4 654 335 A1**

(12) **EUROPEAN PATENT APPLICATION**
published in accordance with Art. 153(4) EPC

(43) Date of publication:
26.11.2025 Bulletin 2025/48

(21) Application number: 24883883.1

(22) Date of filing: 22.05.2024

(51) International Patent Classification (IPC):
*H01M 10/615* (2014.01)   *H01M 10/63* (2014.01)
*H01M 10/44* (2006.01)   *H01M 10/48* (2006.01)

(52) Cooperative Patent Classification (CPC):
Y02E 60/10

(86) International application number:
**PCT/CN2024/094771**

(87) International publication number:
**WO 2025/091870 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 02.11.2023   CN 202311451281

(71) Applicant: Chery Automobile Co., Ltd.
Wuhu, Anhui 241006 (CN)

(72) Inventors:
• LIANG, Xiuwang
  Wuhu, Anhui 241006 (CN)
• HUANG, Bo
  Wuhu, Anhui 241006 (CN)
• LU, Lei
  Wuhu, Anhui 241006 (CN)
• LUO, Zhangxiang
  Wuhu, Anhui 241006 (CN)

(74) Representative: Yang, Shu
Withers & Rogers LLP
2 London Bridge
London SE1 9RA (GB)

(54) **BATTERY PACK SELF-HEATING SYSTEM AND METHOD**

(57) Disclosed is a battery pack self-heating system, including a target battery pack, including a plurality of sub-battery packs and configured to provide electrical energy; an energy storage module, configured to store the electrical energy; a charge-discharge switch group, connected between the target battery pack and the energy storage module, connected to the target battery pack and the energy storage module, and configured to detect a voltage of each sub-battery pack, a voltage of the energy storage module, and a battery temperature of the target battery pack; and a control module, connected to the detection module and the charge-discharge switch group and configured to control the charge-discharge switch group based on voltages of the plurality of sub-battery packs, the voltage of the energy storage module, and the battery temperature of the target battery pack.

FIG. 1

EP 4 654 335 A1

## Description

The present disclosure claims priority to Chinese Patent Application No. 202311451281.8, filed on November 02, 2023, and entitled "BATTERY PACK SELF-HEATING SYSTEM AND METHOD", the disclosure of which is incorporated herein by reference in its entirety.

## TECHNICAL FIELD

The present disclosure relates to the field of battery technologies, and in particular, relates to a battery pack self-heating system and method.

## BACKGROUND

As one of the main ways of energy supply, batteries have been widely used in the automotive field. However, the discharge characteristics and service life of batteries are affected under different temperature conditions. Especially in low-temperature environments, the internal conductivity and electrochemical reaction rate of batteries will decrease, resulting in poor charge-discharge power and reduced durability of batteries. To solve the above problems, when the battery is in a low-temperature environment, the battery temperature can be increased through external heating or internal heating to ensure the charge-discharge efficiency of the battery.

In the case of increasing the battery temperature through internal heating (self-heating), it is usually necessary to add a large number of electrical components, such that the battery current flows through these electrical components. Heat is generated through the current and the internal resistance of the electrical components, thereby realizing the self-heating of the battery pack. However, due to the sophisticated internal structure of the battery pack, the added large number of electrical components not only increases the cost significantly, but also reduces the stability of the battery pack during the charge-discharge process and increases the safety risks during the use of the battery. Therefore, the current self-heating methods for battery packs are relatively inefficient.

## SUMMARY

The present disclosure provides a battery pack self-heating system and method, which can improve the efficiency of battery pack self-heating. The technical solutions are as follows:
In one aspect, a battery pack self-heating system is provided. The system includes:

> a target battery pack, including a plurality of sub-battery packs and configured to provide electrical energy;
> an energy storage module, configured to store the electrical energy released by the target battery pack and to charge the target battery pack through the electrical energy as stored;
> a charge-discharge switch group, connected between the target battery pack and the energy storage module and configured to control a connection and a disconnection of a charge-discharge circuit between the target battery pack and the energy storage module;
> a detection module, connected to both the target battery pack and the energy storage module, and configured to detect a voltage of each sub-battery pack in the plurality of sub-battery packs, a voltage of the energy storage module, and a battery temperature of the target battery pack; and
> a control module, connected to both the detection module and the charge-discharge switch group and configured to control the charge-discharge switch group based on voltages of the plurality of sub-battery packs, the voltage of the energy storage module, and the battery temperature of the target battery pack to realize charge and discharge between the target battery pack and the energy storage module.

In some embodiments, the charge-discharge switch group includes a plurality of switches, wherein a positive terminal of each sub-battery pack is connected to an end of a switch, and another end of the switch is connected to one end of the energy storage module; a negative terminal of each sub-battery pack is connected to an end of a switch, and another end of the switch is connected to another end of the energy storage module; and one of the switches is connected between two adjacent sub-battery packs in the plurality of sub-battery packs; and
the control module is configured to control opening or closing the plurality of switches to control a connection and a disconnection of a charge-discharge circuit between a single sub-battery pack in the plurality of sub-battery packs and the energy storage module, or to control a connection and a disconnection of a charge-discharge circuit between a series circuit of the plurality of sub-battery packs and the energy storage module.

In another aspect, a battery pack self-heating method applied to the above-mentioned system is provided. The method includes:

acquiring the battery temperature of the target battery pack by the detection module;

acquiring, in the case that the battery temperature of the target battery pack is less than a first temperature threshold, voltages of the plurality of sub-battery packs included in the target battery pack and the voltage of the energy storage module by the detection module;

controlling the charge-discharge switch group based on the voltages of the plurality of sub-battery packs and the voltage of the energy storage module to realize the connection of the charge-discharge circuit between the target battery pack and the energy storage module;

detecting, during a charge-discharge process between the target battery pack and the energy storage module, the battery temperature of the target battery pack by the detection module; and

controlling, in the case that the battery temperature of the target battery pack is detected to be greater than or equal to a second temperature threshold, the charge-discharge switch group to realize the disconnection of the charge-discharge circuit between the target battery pack and the energy storage module, wherein the second temperature threshold is greater than the first temperature threshold.

In some embodiments, controlling the charge-discharge switch group based on the voltages of the plurality of sub-battery packs and the voltage of the energy storage module to realize the connection of the charge-discharge circuit between the target battery pack and the energy storage module includes:

determining a sub-battery pack with a maximum voltage in the plurality of sub-battery packs as a first sub-battery pack;

controlling, in the case that a voltage of the first sub-battery pack is greater than the voltage of the energy storage module and a difference between the voltage of the first sub-battery pack and the voltage of the energy storage module is greater than a first voltage threshold, the charge-discharge switch group to charge the energy storage module by the plurality of sub-battery packs in a cyclic manner;

controlling, in the case that an absolute value of the difference between the voltage of the first sub-battery pack and the voltage of the energy storage module is less than or equal to the first voltage threshold, the charge-discharge switch group to charge the energy storage module by the plurality of sub-battery packs connected in series; and

controlling, in the case that the voltage of the first sub-battery pack is less than the voltage of the energy storage module and the difference between the voltage of the energy storage module and the voltage of the first sub-battery pack is greater than the first voltage threshold, the charge-discharge switch group to charge the plurality of sub-battery packs by the energy storage module in a cyclic manner.

In some embodiments, the plurality of sub-battery packs include two sub-battery packs; and controlling the charge-discharge switch group to charge the energy storage module by the plurality of sub-battery packs in the cyclic manner includes:

determining the first sub-battery pack as a discharge sub-battery pack, and determining a discharge loss voltage threshold corresponding to the discharge sub-battery pack based on the voltages of the plurality of sub-battery packs;

controlling switches connected to positive and negative terminals of the discharge sub-battery pack in the charge-discharge switch group to be closed, and other switches to be opened, to charge the energy storage module by the discharge sub-battery pack;

detecting the battery temperature of the target battery pack, a temperature rise rate of the battery temperature of the target battery pack, and a discharge loss voltage of the discharge sub-battery pack by the detection module during a process of charging the energy storage module by the discharge sub-battery pack;

determining, in the case that the battery temperature of the target battery pack is detected to be less than the second temperature threshold, the temperature rise rate of the battery temperature of the target battery pack is detected to be greater than or equal to a rate threshold, and the discharge loss voltage of the discharge sub-battery pack is detected to be greater than or equal to the discharge loss voltage threshold, another sub-battery pack as the discharge sub-battery pack, and returning to a step of determining the discharge loss voltage threshold corresponding to the discharge sub-battery pack based on the voltages of the plurality of sub-battery packs until the battery temperature of the target battery pack is greater than or equal to the second temperature threshold or the temperature rise rate of the battery temperature is less than the rate threshold.

In some embodiments, after detecting the battery temperature of the target battery pack, the temperature rise rate of the battery temperature of the target battery pack, and the discharge loss voltage of the discharge sub-battery pack by the detection module during the process of charging the energy storage module by the discharge sub-battery pack, the method further includes:

controlling, in the case that the battery temperature of the target battery pack is detected to be less than the second temperature threshold and the temperature rise rate of the battery temperature of the target battery pack is detected to be less than the rate threshold, the charge-discharge switch group to charge the energy storage module by the plurality of sub-battery packs connected in series.

In some embodiments, controlling the charge-discharge switch group to charge the energy storage module by the plurality of sub-battery packs connected in series includes:

controlling switches on a series circuit of the plurality of sub-battery packs to be closed, and other switches to be opened, to charge the energy storage module by the plurality of sub-battery packs connected in series;

detecting the battery temperature of the target battery pack and the temperature rise rate of the battery temperature of the target battery pack by the detection module during a process of charging the energy storage module by the plurality of sub-battery packs connected in series;

continuing, in the case that the battery temperature of the target battery pack is detected to be less than the second temperature threshold and the temperature rise rate of the battery temperature of the target battery pack is detected to be greater than or equal to the rate threshold, to charge the energy storage module by the plurality of sub-battery packs connected in series until the battery temperature of the target battery pack is greater than or equal to the second temperature threshold or the temperature rise rate of the battery temperature is less than the rate threshold.

In some embodiments, after detecting the battery temperature of the target battery pack and the temperature rise rate of the battery temperature of the target battery pack by the detection module during the process of charging the energy storage module by the plurality of sub-battery packs connected in series, the method further includes:

controlling, in the case that the battery temperature of the target battery pack is detected to be less than the second temperature threshold and the temperature rise rate of the battery temperature of the target battery pack is detected to be less than the rate threshold, the charge-discharge switch group to charge the plurality of sub-battery packs by the energy storage module in a cyclic manner.

In some embodiments, the plurality of sub-battery packs include two sub-battery packs; and controlling the charge-discharge switch group to charge the plurality of sub-battery packs by the energy storage module in the cyclic manner includes:

determining a sub-battery pack with a minimum voltage in the plurality of sub-battery packs as a second sub-battery pack;

determining the second sub-battery pack as a charging sub-battery pack, and determining a charging rise voltage threshold corresponding to the charging sub-battery pack based on the voltage of the energy storage module and a voltage of the charging sub-battery pack;

controlling switches connected to positive and negative terminals of the charging sub-battery pack in the charge-discharge switch group to be closed, and other switches to be opened, to charge the charging sub-battery pack by the energy storage module;

detecting the battery temperature of the target battery pack, a temperature rise rate of the battery temperature of the target battery pack, and a charging rise voltage of the charging sub-battery pack by the detection module during a process of charging the charging sub-battery pack by the energy storage module;

determining, in the case that the battery temperature of the target battery pack is detected to be less than the second temperature threshold, the temperature rise rate of the battery temperature of the target battery pack is detected to be greater than or equal to the rate threshold, and the charging rise voltage of the charging sub-battery pack is detected to be greater than or equal to the charging rise voltage threshold, another sub-battery pack as the charging sub-battery pack, and returning to a step of determining the charging rise voltage threshold corresponding to the charging sub-battery pack based on the voltage of the energy storage module and the voltage of the charging sub-battery pack until the battery temperature of the target battery pack is greater than or equal to the second temperature threshold or the temperature rise rate of the battery temperature is less than the rate threshold.

In some embodiments, after detecting the battery temperature of the target battery pack, the temperature rise rate of the battery temperature of the target battery pack, and the charging rise voltage of the charging sub-battery pack by the detection module during the process of charging the charging sub-battery pack by the energy storage module, the method further includes:

controlling, in the case that the battery temperature of the target battery pack is detected to be less than the second temperature threshold and the temperature rise rate of the battery temperature of the target battery pack is detected to be less than the rate threshold, the charge-discharge switch group to charge the energy storage module by the plurality of sub-battery packs in a cyclic manner.

In some embodiments, the method further includes: determining a difference between the maximum voltage and the minimum voltage in voltages of the plurality of sub-battery packs;

determining, in the case that the difference is greater than the second voltage threshold, a voltage change threshold based on the voltage of the energy storage module, the maximum voltage, and the minimum voltage;

controlling the charge-discharge switch group to enable the on state of charge-discharge circuit between the target battery pack and the energy storage module; and detecting voltage changes of the plurality of sub-battery packs by the detection module during the charge-discharge process between the target battery pack and the energy storage module;

controlling, in the case that the voltage changes of the plurality of sub-battery packs are detected to be greater than or equal to the voltage change threshold, the charge-discharge switch group to realize an off state of the charge-discharge circuit between the target battery pack and the energy storage module.

In yet another aspect, a vehicle is provided. The vehicle includes a memory and a controller, wherein the memory is configured to store a computer program, and the controller is configured to execute the computer program stored in the memory to perform the steps of the battery pack self-heating method described above.

In still another aspect, a computer-readable storage medium is provided. The storage medium stores a computer program, wherein the computer program is executed by the controller to perform the steps of the battery pack self-heating method described above.

In still another aspect, a computer program product including at least one instruction is provided, wherein when the at least one instruction is executed on a computer, the computer performs the steps of the battery pack self-heating method described above.

The technical solution provided by the present disclosure can achieve at least the following beneficial effects:

The detection module detects the voltages of the sub-battery packs in the target battery pack, the voltage of the energy storage module, and the battery temperature of the target battery pack, and determines whether self-heating is required based on the battery temperature of the target battery pack. When it is determined that battery pack self-heating is required, based on the voltage of each sub-battery pack and the voltage of the energy storage module, the charge-discharge switch group between the target battery pack and the energy storage module is controlled to open or close, thereby achieving self-heating of the target battery pack through charging and discharging between the target battery pack and the energy storage module. The battery pack self-heating method provided by the present disclosure does not require the addition of a large number of electrical components, thereby reducing costs, improving the stability of the target battery pack during charging and discharging, and enhancing the safety of the battery pack self-heating process.

## BRIEF DESCRIPTION OF DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.

FIG. 1 is a schematic diagram of a battery pack self-heating system according to some embodiments of the present disclosure;

FIG. 2 is a schematic diagram of another battery pack self-heating system according to some embodiments of the present disclosure;

FIG. 3 is a flowchart of a battery pack self-heating method according to some embodiments of the present disclosure;

FIG. 4 is a flowchart of another battery pack self-heating method according to some embodiments of the present disclosure;

FIG. 5 is a flowchart of another battery pack self-heating method according to some embodiments of the present disclosure;

FIG. 6 is a flowchart of another battery pack self-heating method according to some embodiments of the present disclosure;

FIG. 7 is a flowchart of another battery pack self-heating method according to some embodiments of the present disclosure;

FIG. 8 is a flowchart of another battery pack self-heating method according to some embodiments of the present disclosure; and

FIG. 9 is a schematic structural diagram of a vehicle according to some embodiments of the present disclosure.

## DETAILED DESCRIPTION

In order to make the objectives, technical solutions, and advantages of embodiments of the present disclosure clearer, the embodiments of the present disclosure will be described in further detail below with reference to the accompanying drawings.

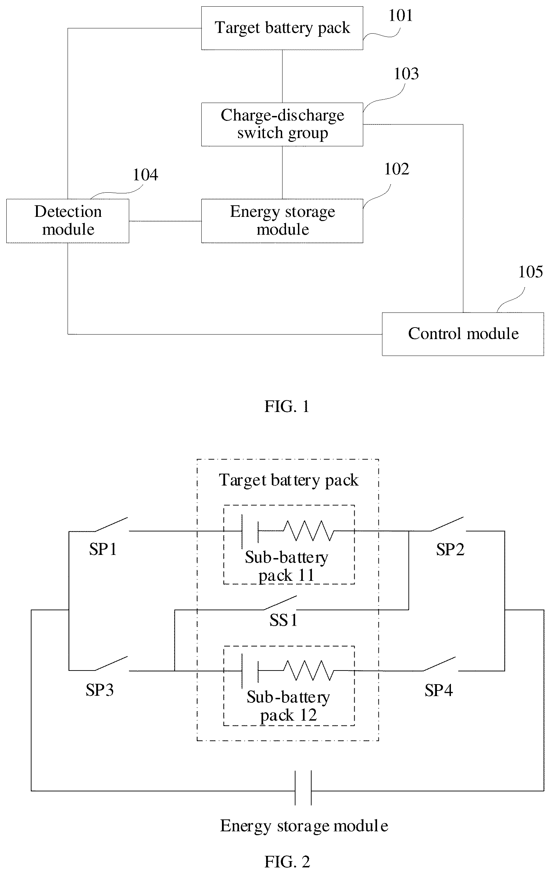

Referring to FIG. 1, FIG. 1 is a schematic diagram of a battery pack self-heating system according to some embodiments of the present disclosure. The battery pack self-heating system includes a target battery pack 101, an energy storage module 102, a charge-discharge switch group 103, a detection module 104, and a control module 105.

The target battery pack 101 includes a plurality of sub-battery packs for providing electrical energy. The energy storage module 102 is configured to store the electrical energy released by the target battery pack 101 and to charge the target battery pack 101 through the stored electrical energy. The charge-discharge switch group 103 is connected between the target battery pack 101 and the energy storage module 102, and is configured to control a connection and a disconnection of the charge-discharge circuit between the target battery pack 101 and the energy storage module 102. The detection module 104 is connected to both the target battery pack 101 and the energy storage module 102, and is configured to detect the voltage of each sub-battery pack in the plurality of sub-battery packs, the voltage of the energy storage module 102, and the battery temperature of the target battery pack 101. The control module 105 is connected to both the detection module 104 and the charge-discharge switch group 103, and is configured to control the charge-discharge switch group 103 based on the voltages of the plurality of sub-battery packs, the voltage of energy storage module 102, and the battery temperature of target battery pack 101, to realize charge and discharge between the target battery pack 101 and the energy storage module 102.

The target battery pack 101 may be the power battery pack of a vehicle, and includes a plurality of batteries. By dividing the plurality of batteries, the plurality of sub-battery packs are obtained.

The principles and quantity for dividing sub-battery packs may be determined based on usage requirements. For example, the target battery pack 101 may be divided into two sub-battery packs. Specifically, the plurality of sub-batteries on one side of the target battery pack 101, such as the left side, may be designated as the first sub-battery pack, and the plurality of sub-batteries on the other side, such as the right side, may be designated as the second sub-battery pack.

It should be noted that in the scenario of battery pack self-heating, the target battery pack 101 is primarily used to provide electrical energy to the energy storage module 102, thereby increasing the temperature of the batteries in the target battery pack 101 through the migration of electrons.

The energy storage module 102 may be any component capable of storing and releasing electrical energy. For example, the energy storage module 102 may be a single high-capacity capacitor to achieve electrical energy storage and release.

In some embodiments, the charge-discharge switch group 103 includes a plurality of switches. The positive terminal of each sub-battery pack is connected to an end of a switch, and the other end of the switch is connected to one end of the energy storage module 102. The negative terminal of each sub-battery pack is connected to an end of a switch, and the other end of the switch is connected to the other end of the energy storage module 102. One switch is connected between two adjacent sub-battery packs in the plurality of sub-battery packs. The control module 105 is configured to control the opening or closing of the plurality of switches to control a connection and a disconnection of the charge-discharge circuit between a single sub-battery pack in the plurality of sub-battery packs and the energy storage module 102, or to control a connection and a disconnection of the charge-discharge circuit between the series circuit of the plurality of sub-battery packs and the energy storage module 102.

For example, as shown in FIG. 2, the target battery pack includes a sub-battery pack 11 and a sub-battery pack 12, and the charge-discharge switch group includes five switches, namely SP1, SP2, SP3, SP4, and SS1. The positive terminal of the sub-battery pack 11 is connected to one end of the switch SP1, the positive terminal of the sub-battery pack 12 is connected to one end of the switch SP3, and the other ends of the switches SP1 and SP3 are connected to one end of the energy storage module 102. The negative terminal of the sub-battery pack 11 is connected to one end of the switch SP2, and the negative terminal of the sub-battery pack 12 is connected to one end of the switch SP4. The other ends of the switches SP2 and SP4 are connected to the other end of the energy storage module 102. The switch SS1 is connected between the negative terminal of the sub-battery pack 11 and the positive terminal of the sub-battery pack 12.

It should be noted that the switches may be high-frequency switches to realize rapid connection and disconnection of circuits between sub-battery packs and between sub-battery packs and the energy storage module. The control of high-frequency switches by the control module 105 will also generate heat in the circuit, thereby promoting an increase in the battery temperature of the target battery pack 101.

The detection module 104 may include a voltage sensor for detecting the cell voltage of each sub-battery pack and the voltage of the energy storage module 101. The detection module 104 may also include a temperature sensor for detecting the battery temperature of the target battery pack 101.

The above-mentioned control module 105 may serve as the execution subject for the battery pack self-heating method in the embodiments of the present disclosure. The control module 105 may be a general-purpose central processing unit (CPU), a network processor (NP), a microprocessor, or one or more integrated circuits for implementing the solutions of the present disclosure, such as an application-specific integrated circuit (ASIC), a programmable logic device (PLD), or a combination thereof. The above-mentioned PLD may be a complex programmable logic device (CPLD), a field-programmable gate array (FPGA), a generic array logic (GAL), or any combination thereof.

Those skilled in the art can understand that the above-mentioned target battery pack 101, the energy storage module 102, the charge-discharge switch group 103, the detection module 104, and the control module 105 are merely examples. Other existing or future battery packs, energy storage modules, charge-discharge switch groups, detection modules, or control modules that are applied to the embodiments of the present disclosure should also be included within the scope of protection of the embodiments of the present disclosure and are hereby incorporated by reference.

It should be noted that the implementation environment described in the embodiments of the present disclosure is provided to more clearly illustrate the technical solutions of the embodiments of the present disclosure and does not constitute a limitation on the technical solutions provided by the embodiments of the present disclosure. Those skilled in the art can understand that as the implementation environment evolves, the technical solutions provided by the embodiments of the present disclosure are equally applicable to similar technical problems.

The following provides a detailed explanation of a battery pack self-heating method provided by the embodiments of the present disclosure.

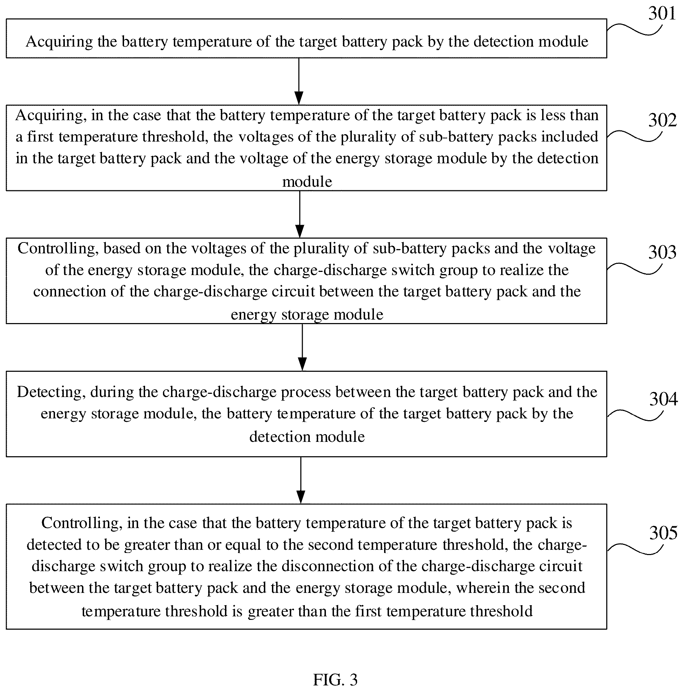

FIG. 3 is a flowchart of a battery pack self-heating method according to some embodiments of the present disclosure, which is applied to the above-mentioned control module. Referring to FIG. 3, the method includes the following steps.

In step 301, the battery temperature of the target battery pack is acquired by the detection module.

In some embodiments, the detection module may acquire the battery temperature of the target battery pack in real time and send the real-time battery temperature to the control module.

The battery temperature of the target battery pack refers to the cell temperature of the target battery pack. For example, the detection module may include temperature sensors connected to the cells of each sub-battery pack in the target battery pack to acquire the cell temperature of each sub-battery pack.

In some embodiments, the detection module may use the average temperature of the plurality of cell temperatures corresponding to the plurality of sub-battery packs as the battery temperature of the target battery pack, or may calculate the battery temperature of the target battery pack based on the cell temperature of each sub-battery pack using a preset temperature algorithm.

In step 302, in the case that the battery temperature of the target battery pack is less than a first temperature threshold, the detection module acquires the voltages of the plurality of sub-battery packs included in the target battery pack and the voltage of the energy storage module.

In the case that the battery temperature of the target battery pack is less than the first temperature threshold, it indicates that the current battery temperature of the target battery pack is relatively low, which may reduce the charge-discharge power of the target battery pack. Therefore, it is necessary to start the self-heating of the target battery pack (i.e., control the start of charge and discharge between the target battery pack and the energy storage module).

In some embodiments, the voltage of the sub-battery pack refers to the cell voltage of the sub-battery pack, and the voltage of the energy storage module refers to the cell voltage of the energy storage module. For example, the detection module may include voltage sensors connected to the cell of each sub-battery pack to obtain the cell voltage of each sub-battery pack, and a voltage sensor connected to the cell of the energy storage module to obtain the cell voltage of the energy storage module.

In other embodiments, the voltage of the sub-battery pack may also refer to the voltage across the sub-battery pack, and the voltage of the energy storage module may also refer to the voltage across the energy storage module. For example, for any sub-battery pack, the detection module may detect the voltage across the sub-battery pack.

In some embodiments, prior to implementing self-heating of the target battery pack, it is also possible to determine whether the target battery pack has a safety risk based on the voltages of the plurality of sub-battery packs and the voltage of the energy storage module, thereby enhancing safety during the subsequent self-heating process of the target battery pack.

In some embodiments, the method further includes: determining the difference between the maximum voltage and the minimum voltage among the voltages of the plurality of sub-battery packs; in the case that the difference is greater than the second voltage threshold, determining a voltage change threshold based on the voltage of the energy storage module, the maximum voltage, and the minimum voltage; controlling the charge-discharge switch group to realize the connection of the charge-discharge circuit between the target battery pack and the energy storage module; during the process of charging and discharging between the target battery pack and the energy storage module, detecting the voltage changes of the plurality of sub-battery packs by the detection module; and in the case that the voltage changes of the plurality of sub-battery packs are detected to be greater than or equal to the voltage change threshold, controlling the charge-discharge switch group to realize an off state of the charge-discharge circuit between the target battery pack and the energy storage module.

It should be noted that in the case that the difference between the maximum voltage and the minimum voltage among the voltages of the plurality of sub-battery packs is greater than the second voltage threshold, it indicates that the voltage difference between the sub-battery packs is relatively large, which leads to a potential safety risk during the process of charging and discharging the target battery pack. In this case, the connection of the charge-discharge circuit between the target battery pack and the energy storage module can be controlled to reduce the maximum voltage or increase the minimum voltage in the sub-battery pack, thereby reducing the voltage difference between the sub-battery packs and improving the safety of the target battery pack.

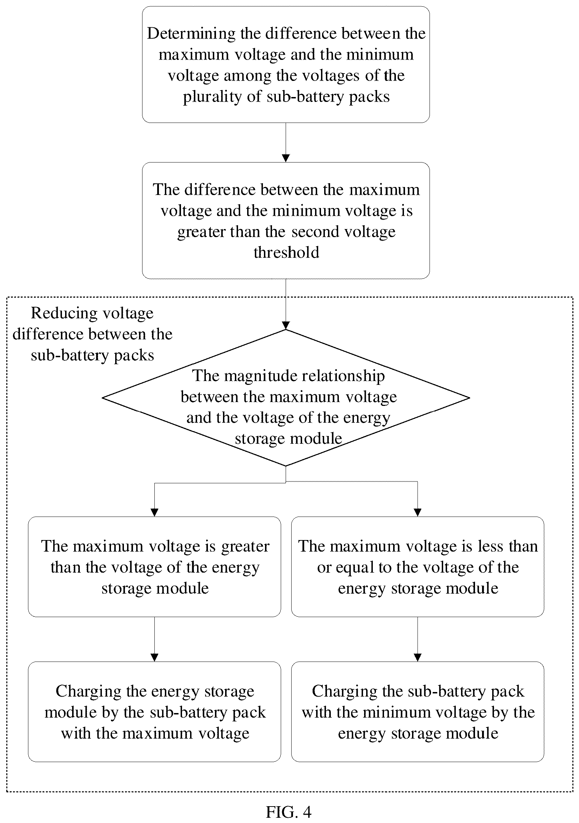

In some embodiments, as shown in FIG. 4, in the case that the maximum voltage is greater than the voltage of the energy storage module, the charge-discharge switch group can be controlled to realize the connection of the charge-discharge circuit between the energy storage module and the sub-battery pack with the maximum voltage, thereby charging the energy storage module by the sub-battery pack with the maximum voltage. In the case that the maximum voltage is not greater than the voltage of the energy storage module, i.e., the maximum voltage is less than or equal to the voltage of the energy storage module, the charge-discharge switch group can be controlled to realize the connection of the charge-discharge circuit between the energy storage module and the sub-battery pack with the minimum voltage, thereby charging the sub-battery pack with the minimum voltage by the energy storage module.

Referring to FIG. 2, taking a scenario where the target battery pack includes two sub-battery packs, the voltage of sub-battery pack 11 is greater than that of the sub-battery pack 12, and the difference between the voltage of sub-battery pack 11 and that of the sub-battery pack 12 is greater than the second voltage threshold, as an example. If the voltage of the sub-battery pack 11 is greater than the voltage of the energy storage module, the switches SP1 and SP2 are controlled to close, and the switches SP3, SP4, and SS1 are controlled to open, and the energy storage module is charged by the sub-battery pack 11. If the voltage of the sub-battery pack 11 is less than or equal to the voltage of the energy storage module, the switches SP1, SP2, and SS1 are controlled to open, the switches SP3 and SP4 are controlled to close, and the sub-battery pack 12 is charged by the energy storage module.

In the case that the energy storage module is charged by the sub-battery pack with the maximum voltage, the above-mentioned voltage change threshold is the discharge loss voltage threshold. In the case that the sub-battery pack with the minimum voltage is charged by the energy storage module, the above-mentioned voltage change threshold is the charging rise voltage threshold. In the case that the energy storage module is charged by the sub-battery pack with the maximum voltage, and the discharge loss voltage of the sub-battery pack with the maximum voltage reaches the discharge loss voltage threshold, the charge-discharge switch group is controlled to realize the disconnection of the charging circuit between the sub-battery pack with the maximum voltage and the energy storage module. The discharge loss voltage of the sub-battery pack with the maximum voltage reaching the discharge loss voltage threshold can be understood as the discharge loss voltage being greater than or equal to the discharge loss voltage threshold. In the case that the sub-battery pack with the minimum voltage is charged by the energy storage module and the charging rise voltage of the sub-battery pack with the minimum voltage reaches the charging rise voltage threshold, the charge-discharge switch group is controlled to realize the disconnection of the charging circuit between the energy storage module and the sub-battery pack with the minimum voltage. The charging rise voltage of the sub-battery pack with the minimum voltage reaching the charging rise voltage threshold can be understood as the charging rise voltage being greater than or equal to the charging rise voltage threshold.

The discharge loss voltage threshold and the charging rise voltage threshold may be determined based on the voltage difference between the plurality of sub-battery packs, such as $\triangle U = 0.8 \times$ (Umax-Umin), wherein Umax represents the maximum voltage among the voltages of the plurality of sub-battery packs, Umin represents the minimum voltage among the voltages of the plurality of sub-battery packs, and 0.8 represents the corresponding relationship between the discharge loss voltage threshold (or charging rise voltage threshold) and the voltage difference between sub-battery packs. Specifically, it can be determined according to actual usage requirements, such as 0.9, 0.85, etc.

In some embodiments, the discharge loss voltage threshold or charging loss voltage threshold may also be determined based on the voltage difference between the maximum voltage and the voltage of the energy storage module, and the voltage difference between the voltage of the energy storage module and the minimum voltage in a case where the voltage of the energy storage module is less than the maximum voltage and greater than the minimum voltage.

Exemplarily, if the voltage of the energy storage module is less than the maximum voltage and greater than the minimum voltage, i.e., the voltage of the energy storage module is between the maximum voltage and the minimum voltage, assuming the voltage of the energy storage module is 3.5V, the maximum voltage among the voltages of the plurality of sub-battery packs is 3.8V, and the minimum voltage is 3.4V. It can be obtained that the voltage difference between the maximum voltage and the voltage of the energy storage module is 0.3V, and the voltage difference between the voltage of the energy storage module and the minimum voltage is 0.1V. This indicates that compared with the voltage difference with the sub-battery pack with the minimum voltage, the voltage difference between the energy storage module and the sub-battery pack with the maximum voltage is larger. Therefore, the energy storage module can be charged by the sub-battery pack with the maximum voltage to achieve a rapid reduction in the voltage of the sub-battery pack with the maximum voltage, i.e., a rapid reduction in the voltage difference between the sub-battery packs. Assuming the voltage of the energy storage module is 3.3V, the maximum voltage among the plurality of sub-battery packs is 3.4V, and the minimum voltage is 3.0 V. It can be obtained that the voltage difference between the maximum voltage and the voltage of the energy storage module is 0.1V, and the voltage difference between the voltage of the energy storage module and the minimum voltage is 0.3V. This indicates that compared with the voltage difference between the energy storage module and the sub-battery pack with the maximum voltage, the voltage difference between the energy storage module and the sub-battery pack with the minimum voltage is larger. Therefore, the sub-battery pack with the minimum voltage can be charged by the energy storage module to achieve a rapid increase in the voltage of the sub-battery pack with the minimum voltage, i.e., a rapid reduction in the voltage difference between the sub-battery packs.

It should be noted that the main purpose of the above steps is as follows: if the target battery pack needs to increase battery temperature through self-heating, the voltage difference between the sub-battery packs should be ensured to be within the allowable range before the self-heating of the target battery pack is realized, such as ensuring that the voltage difference between the sub-battery packs is less than or equal to the second voltage threshold. If the voltage difference between the sub-battery packs is large, it is necessary to first control the voltage difference between the sub-battery packs within the allowable range, and then realize the charge and discharge between the target battery pack and the energy storage module.

In other embodiments, in the case that the voltage difference between sub-battery packs is large, it is also possible to disregard whether the battery temperature of the target battery pack is less than the first temperature threshold, and only need to ensure that the battery temperature of the target battery pack is within a safe range, for example, only to ensure that the battery temperature of the target battery pack is less than or equal to the third temperature threshold. That is, in the case that the voltage difference between the sub-battery packs is large, the first priority is to reduce the voltage difference between the sub-battery packs, and then consider whether it is necessary to realize the self-heating of the target battery pack through the charge and discharge between the target battery pack and the energy storage module.

In some embodiments, after acquiring the voltages of the plurality of sub-battery packs and the voltage of the energy storage module, the self-heating of the target battery pack may also be directly achieved, such as by directly executing the step 303 below, which is not limited in the present disclosure.

In step 303, based on the voltages of the plurality of sub-battery packs and the voltage of the energy storage module, the charge-discharge switch group is controlled to realize the connection of the charge-discharge circuit between the target battery pack and the energy storage module.

In some embodiments, controlling the charge-discharge switch group based on the voltages of the plurality of sub-battery packs and the voltage of the energy storage module to realize the connection of the charge-discharge circuit between the target battery pack and the energy storage module through the following steps (1) to (4).

(1) A sub-battery pack with the maximum voltage in the plurality of sub-battery packs is determined as the first sub-battery pack.

(2) In the case that the voltage of the first sub-battery pack is greater than the voltage of the energy storage module, and the difference between the voltage of the first sub-battery pack and the voltage of the energy storage module is greater than the first voltage threshold, the charge-discharge switch group is controlled to charge the energy storage module by the plurality of sub-battery packs in a cyclic manner.

If the voltage of the first sub-battery pack is greater than the voltage of the energy storage module, and the difference between the voltage of the first sub-battery pack and the voltage of the energy storage module is greater than the first voltage threshold, it indicates that the voltage of the first sub-battery pack is sufficiently higher than that of the energy storage module. In this case, the current when the first sub-battery pack charges the energy storage module will be relatively large, thereby ensuring that sufficient heat is generated during the process of charging and discharging. This enables a faster temperature rise rate of the battery temperature of the target battery pack, that is, a higher self-heating efficiency of the target battery pack. Therefore, in the case that the voltage of the first sub-battery pack is greater than the voltage of the energy storage module and the difference between the voltage of the first sub-battery pack and the voltage of the energy storage module is greater than the first voltage threshold, the target battery pack can achieve rapid temperature rise by a single sub-battery pack charging the energy storage module.

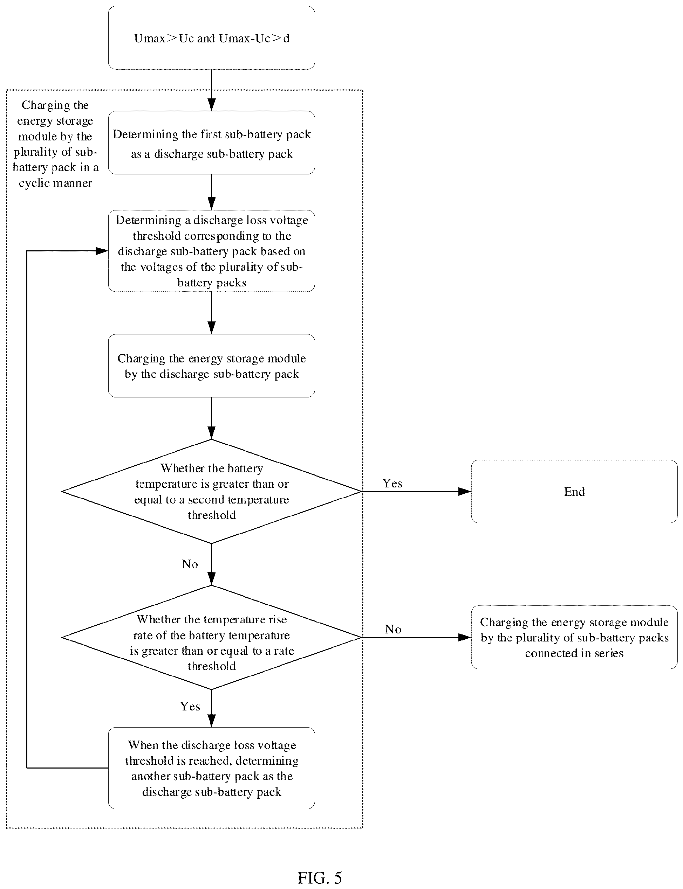

In some embodiments, as shown in FIG. 5, Umax represents the maximum voltage among the voltages of the plurality of sub-battery packs, i.e., the voltage of the first sub-battery pack; Uc refers to the voltage of the energy storage module, and d represents the first voltage threshold. The plurality of sub-battery packs include two sub-battery packs. In this case, the first sub-battery pack may be determined as the discharge sub-battery pack, and the discharge loss voltage threshold corresponding to the discharge sub-battery pack is determined based on the voltage of the plurality of sub-battery packs. The switches connected to the positive and negative terminals of the discharge sub-battery pack in the charge-discharge switch group are controlled to be closed, and the other switches are controlled to be opened, to charge the energy storage module by the discharge sub-battery pack. During the process of charging the energy storage module by the discharge sub-battery pack, the battery temperature of the target battery pack, the temperature rise rate of the battery temperature of the target battery pack, and the discharge loss voltage of the discharge sub-battery pack are detected by the detection module. In the case that the battery temperature of the target battery pack is detected to be less than the second temperature threshold, the temperature rise rate of the battery temperature of the target battery pack is detected to be greater than or equal to the rate threshold, and the discharge loss voltage of the discharge sub-battery pack is detected to be greater than or equal to the discharge loss voltage threshold, another sub-battery pack is determined as the discharge sub-battery pack, and returning to the step of determining the discharge loss voltage threshold corresponding to the discharge sub-battery pack based on the voltages of the plurality of sub-battery packs until the battery temperature of the target battery pack is greater than or equal to the second temperature threshold or the temperature rise rate of the battery temperature is less than the rate threshold.

During the process of charging the energy storage module by the discharge sub-battery pack, as the charging time increases, the voltage of the discharge sub-battery pack gradually decreases, meaning the discharge sub-battery pack will incur voltage loss. To prevent excessive voltage loss of the discharge sub-battery pack from causing a large voltage difference between the sub-battery packs and leading to potential safety hazards during the self-heating process, in the embodiment of the present disclosure, the discharge loss voltage threshold may be set based on the voltages of the plurality of sub-battery packs. When the voltage loss of a single discharge of the discharge sub-battery pack is greater than or equal to the discharge loss voltage threshold, the sub-battery packs other than the currently discharge sub-battery pack are used as the discharge sub-battery packs to discharge the energy storage module, to realize charging the energy storage module by the plurality of sub-battery packs in a cyclic manner. That is, alternately charging the energy storage module by the plurality of sub-battery packs, the plurality of sub-battery packs can alternately generate voltage loss. In this way, when the sub-battery packs charge the energy storage module, it avoids potential safety hazards caused by a large voltage difference between the sub-battery packs due to excessive voltage loss of a certain sub-battery pack in a single discharge.

In some embodiments, the discharge voltage loss threshold may be determined by the following formula:

$$U_\Delta^i = 1.5 * \Delta U^i \qquad \text{Formula 1}$$

i represents the i-th discharge cycle, and i is a positive integer. $U_\Delta^i$ represents the discharge loss voltage threshold corresponding to the discharge sub-battery pack during the i-th discharge cycle, and $\Delta U^i$ represents the voltage difference between sub-battery packs during the i-th discharge cycle. For example, in the case that the plurality of sub-battery packs include two sub-battery packs, $\Delta U^i = \left| U_1^i - U_2^i \right|$, wherein $U_1^i$ represents the voltage of the first sub-battery pack during the i-th discharge cycle (such as the voltage of the sub-battery pack 11 in FIG. 2 during the i-th discharge cycle), and $U_2^i$ represents the voltage of the sub-battery pack other than the first sub-battery pack during the i-th discharge cycle (such as the voltage of the sub-battery pack 12 in FIG. 2 during the i-th discharge cycle).

It should be noted that the 1.5 in Formula 1 represents the corresponding relationship between the discharge loss voltage threshold and the voltage difference between the sub-battery packs. The corresponding relationship may be selected based on actual usage requirements, such as 1.3 times, 1.7 times, or 2 times.

The temperature rise rate of the battery temperature of the target battery pack can be determined based on the change in the battery temperature of the target battery pack. For example, the temperature rise rate of the battery temperature of the target battery pack can be determined based on the temperature rise of the target battery pack within a target time period. The target time period can be flexibly determined according to actual usage requirements, such as 2 seconds or 1 second, and the specific unit of measurement for the temperature rise rate may be selected based on actual usage requirements, such as degrees Celsius per second, degrees Fahrenheit per minute, etc.

Referring to FIG. 2, assuming that the target battery pack includes a sub-battery pack 11 and a sub-battery pack 12, and the voltage of the sub-battery pack 11 is greater than that of the sub-battery pack 12. In the case that the sub-battery pack 11 is used as the discharge sub-battery pack, switches SP1 and SP2 are controlled to be closed, switches SP3, SP4, and SS1 are controlled to be opened, and the sub-battery pack 11 is used as the discharge sub-battery pack to charge the energy storage module. If when the discharge loss voltage of the sub-battery pack 11 is greater than or equal to the discharge loss voltage threshold, the battery temperature of the target battery pack is still less than the second temperature threshold, and the temperature rise rate of the battery temperature of the target battery pack is still greater than or equal to the rate threshold, then switches SP1, SP2 and SS1 are controlled to be opened, and switches SP3 and SP4 are controlled to be closed, such that sub-battery pack 12 is used as the discharge sub-battery pack to charge the energy storage module, thereby realizing charging of the energy storage module by the plurality of sub-battery packs in a cyclic manner.

As shown in FIG. 5, the cycling condition for the plurality of sub-battery packs to charge the energy storage module in a cyclic manner is that the battery temperature of the target battery pack is less than the second temperature threshold, and the temperature rise rate of the battery temperature of the target battery pack during the cycling process remains greater than or equal to the rate threshold. In the case that the battery temperature of the target battery pack is greater than or equal to the second temperature threshold, since the temperature of the target battery pack has already met the condition, the self-heating of the target battery pack can be directly terminated. In the case that the temperature rise rate of the battery temperature of the target battery pack is less than the rate threshold, since charging the energy storage module by the plurality of sub-battery packs in a cyclic manner can no longer cause the target battery pack to heat up quickly, the charging of the energy storage module by the plurality of sub-battery packs in a cyclic manner can be terminated.

In other words, in the case that the temperature of the target battery pack is greater than or equal to the second temperature threshold, it indicates that the battery temperature of the target battery pack will no longer adversely affect the external charging and discharging power of the target battery pack, and thus the self-heating of the target battery pack can be terminated.

In addition, as the sub-battery packs continue to charge the energy storage module in a cyclic manner, the voltage of the sub-battery packs gradually decreases, and the voltage of the energy storage module gradually increases, resulting in a gradual reduction in the voltage difference between the sub-battery packs and the energy storage module. In this case, due to the reduction in voltage difference, the current in the charging circuit weakens, which in turn leads to a decrease in heat generation in the charging circuit and a reduction in the temperature rise rate of the battery temperature of the target battery pack. In the case that the temperature rise rate of the battery temperature of the target battery pack is less than the rate threshold, it indicates that the voltage between the current sub-battery pack and the energy storage module is already relatively close. If the self-heating of the target battery pack continues to be realized in this way, the temperature rise rate of the battery temperature of the target battery pack will only become smaller and smaller. At this time, to improve the self-heating efficiency of the target battery pack, it is necessary to adjust the charging and discharging method between the target battery pack and the energy storage module.

In some embodiments, as shown in FIG. 5, in the case that the battery temperature of the target battery pack is detected to be less than the second temperature threshold and the temperature rise rate of the battery temperature of the target battery pack is detected to be less than the rate threshold, the charge-discharge switch group can be controlled to charge the energy storage module by the plurality of sub-battery packs connected in series. The detailed content of charging the energy storage module by the plurality of sub-battery packs connected in series will be described in detail in the following step (3), and will not be repeated here.

(3) In the case that the absolute value of the difference between the voltage of the first sub-battery pack and the voltage of the energy storage module is less than or equal to the first voltage threshold, the charge-discharge switch group is controlled to charge the energy storage module by the plurality of sub-battery packs connected in series.

If the absolute value of the difference between the voltage of the first sub-battery pack and the voltage of the energy storage module is less than or equal to the first voltage threshold, it indicates that the voltage of the first sub-battery pack is close to that of the energy storage module. In this case, whether charging the energy storage module by the first sub-battery pack or charging the first sub-battery pack by the energy storage module, due to the small difference between the voltage of the first sub-battery pack and the voltage of the energy storage module, the current in the charging circuit is also small, and less heat is generated during the charging and discharging process. This leads to a slower temperature rise rate of the battery temperature of the target battery pack, i.e., low self-heating efficiency of the target battery pack, which cannot meet the requirement of rapid temperature rise of the target battery pack.

In this case, considering the principle of battery series voltage boosting, the plurality of sub-battery packs can be connected in series to ensure that the overall voltage of the target battery pack is sufficiently higher than that of the energy storage module. This ensures that the current in the charge-discharge circuit is large enough, which in turn ensures sufficient heat generation during the charge-discharge process. As a result, the temperature rise rate of the battery temperature of the target battery pack is relatively fast, that is, the self-heating efficiency of the target battery pack is relatively high.

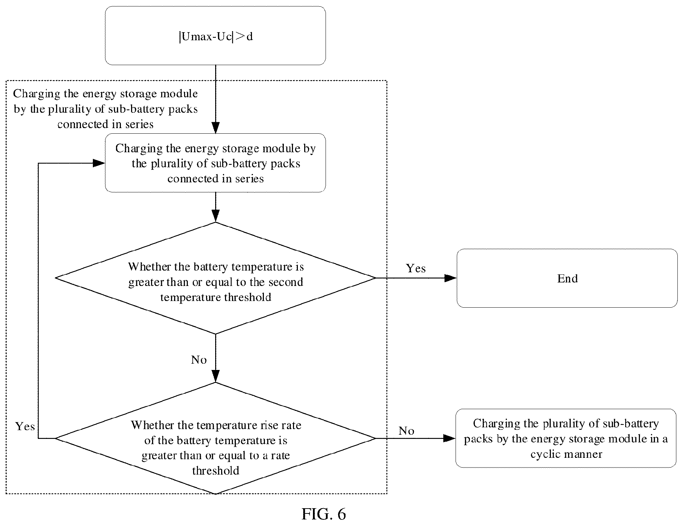

In some embodiments, as shown in FIG. 6, the switches on the series circuit of the plurality of sub-battery packs can be controlled to be closed, and other switches can be controlled to be opened, such that the energy storage module is charged by the plurality of sub-battery packs connected in series. During the process of the plurality of sub-battery packs connected in series charging the energy storage module, the battery temperature of the target battery pack and the temperature rise rate of the battery temperature of the target battery pack are detected by the detection module. In the case that the battery temperature of the target battery pack is detected to be less than the second temperature threshold and the temperature rise rate of the battery temperature of the target battery pack is greater than or equal to the rate threshold, charging of the energy storage module by the plurality of sub-battery packs connected in series continues until the battery temperature of the target battery pack is greater than or equal to the second temperature threshold or the temperature rise rate of the battery temperature is less than the rate threshold.

Referring to FIG. 2, in the case that charging the energy storage module by the sub-battery pack 11 and the sub-battery pack 12 connected in series, the switches SP1, SS1, and SP4 can be controlled to be closed, and the switches SP2 and SP2 are controlled to be opened, thereby enabling the series connection of the sub-battery pack 11 and the sub-battery pack 12 to charge the energy storage module.

As shown in FIG. 6, the execution condition for the plurality of sub-battery packs charging the energy storage module in series is that the battery temperature of the target battery pack is less than the second temperature threshold, and the temperature rise rate of the battery temperature of the target battery pack during the cycle process is continuously greater than or equal to the rate threshold. In the case that the battery temperature of the target battery pack is greater than or equal to the second temperature threshold, since the temperature of the target battery pack has already met the condition, the self-heating of the target battery pack can be directly terminated. In the case that the temperature rise rate of the battery temperature of the target battery pack is less than the rate threshold, since charging the energy storage module by the plurality of sub-battery packs connected in series can no longer cause the target battery pack to heat up quickly, the charging of the energy storage module by the plurality of sub-battery packs connected in series can be terminated.

In other words, in the case that the temperature of the target battery pack is greater than or equal to the second temperature threshold, it indicates that the battery temperature of the target battery pack will no longer adversely affect the external charging and discharging power of the target battery pack, and thus the self-heating of the target battery pack can be terminated.

In addition, as the sub-battery packs continue to charge the energy storage module in series, the overall voltage of the series-connected sub-battery packs gradually decreases, and the voltage of the energy storage module gradually increases. This results in a gradual reduction in the voltage difference between the overall voltage of the series-connected sub-battery packs and the voltage of the energy storage module. In this case, due to the reduction in voltage difference, the current in the charging circuit weakens, which in turn leads to a decrease in heat generation in the charging circuit and a reduction in the temperature rise rate of the battery temperature of the target battery pack. In the case that the temperature rise rate of the battery temperature of the target battery pack is less than the rate threshold, it indicates that the overall voltage of the series-connected sub-battery packs and the voltage of the energy storage module are already relatively close. If the self-heating of the target battery pack continues to be realized in this way, the temperature rise rate of the battery temperature of the target battery pack will only become smaller and smaller. At this time, to improve the self-heating efficiency of the target battery pack, it is necessary to adjust the charging and discharging method between the target battery pack and the energy storage module.

In some embodiments, as shown in FIG. 6, in the case that the battery temperature of the target battery pack is detected to be less than the second temperature threshold and the temperature rise rate of the battery temperature of the target battery pack is less than the rate threshold, the charge-discharge switch group can be controlled to charge the plurality of sub-battery packs in a cyclic manner by the energy storage module. The detailed content of charging the plurality of sub-battery packs by the energy storage module in a cyclic manner will be described in detail in the following step (4), and will not be repeated here.

(4) In the case that the voltage of the first sub-battery pack is less than the voltage of the energy storage module, and the difference between the voltage of the energy storage module and the voltage of the first sub-battery pack is greater than the first voltage threshold, the charge-discharge switch group is controlled to charge the plurality of sub-battery packs by the energy storage module in a cyclic manner.

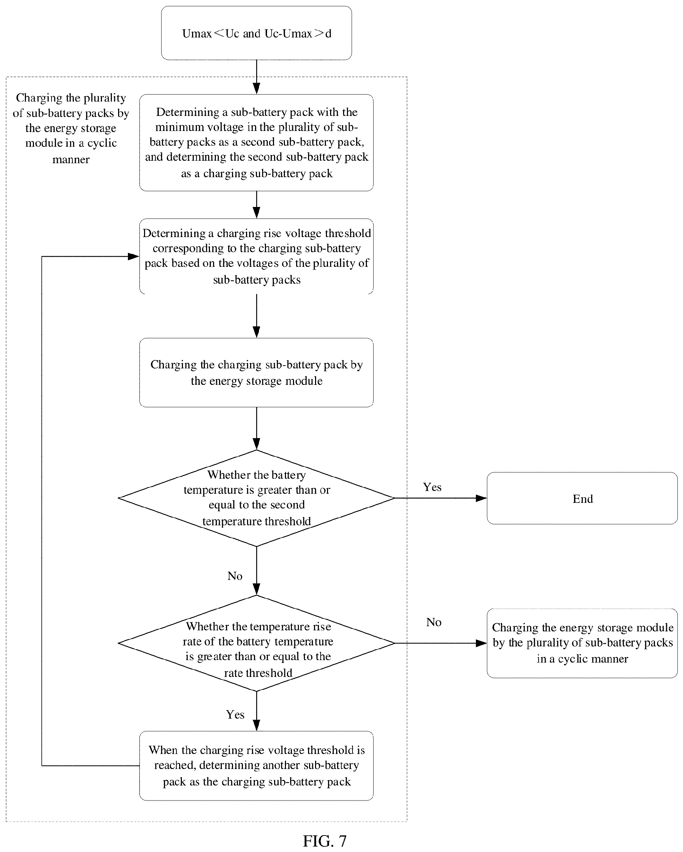

In some embodiments, as shown in FIG. 7, the plurality of sub-battery packs include two sub-battery packs. In this case, a sub-battery pack with the minimum voltage in the plurality of sub-battery packs can be determined as the second sub-battery pack. The second sub-battery pack is determined as the charging sub-battery pack, and the charging rise voltage threshold corresponding to the charging sub-battery pack is determined based on the voltage of the energy storage module and the voltage of the charging sub-battery pack. The switches connected to the positive and negative terminals of the charging battery pack in the charge-discharge switch group are controlled to be closed, and other switches are controlled to be opened, to charge the charging battery pack by the energy storage module. During the process of charging the charging battery pack by the energy storage module, the battery temperature of the target battery pack, the temperature rise rate of the battery temperature of the target battery pack, and the charging voltage rise of the charging battery pack are detected by the detection module. In the case that the battery temperature of the target battery pack is detected to be less than the second temperature threshold, the temperature rise rate of the battery temperature of the target battery pack is detected to be greater than or equal to the rate threshold, and the charging rise voltage of the charging battery pack is detected to be greater than or equal to the charging rise voltage threshold, another sub-battery pack is determined as the charging battery pack, and returning to a step of determining the charging rise voltage threshold corresponding to the charging sub-battery pack based on the voltage of the energy storage module and the voltage of the charging sub-battery pack until the battery temperature of the target battery pack is greater than or equal to the second temperature threshold or the temperature rise rate of the battery temperature is less than the rate threshold.

During the process of charging the charging battery pack by the energy storage module, the voltage of the charging battery pack gradually increases as the charging time increases. To prevent excessive voltage rise in the charging battery pack from causing a large voltage difference between the sub-battery packs and posing safety hazards. In the embodiments of the present disclosure, the charging voltage rise threshold may be set based on the voltages of the plurality of sub-battery packs. In the case that the voltage rise of the charging battery pack in a single cycle is greater than or equal to the charging voltage rise threshold, the sub-battery packs other than the currently discharge sub-battery pack are determined as the charging battery packs, and the charging battery packs are charged by the energy storage module, to realize charging the plurality of sub-battery packs by the energy storage module in a cyclic manner. That is, alternately charging the plurality of sub-battery packs by the energy storage module, the voltages of the plurality of sub-battery packs can rise alternately. This prevents potential safety hazards caused by a large voltage difference between the sub-battery packs due to a significant voltage rise in a certain sub-battery pack when the energy storage module charges the sub-battery packs.

In some embodiments, the charging rising voltage threshold may be determined by the following formula 2:

$$U_\Delta^i = 1.5 * \Delta U^i \qquad \text{Formula 2}$$

i represents the i-th charging cycle, and i is a positive integer. $U_\Delta^i$ represents the charging voltage threshold corresponding to the sub-battery pack during the i-th charging cycle, and $\Delta U^i$ represents the voltage difference between sub-battery packs during the i-th charging cycle. For example, in the case that the plurality of sub-battery packs includes two sub-battery packs, $\Delta U^i = |U_1^i - U_2^i|$, wherein $U_1^i$ represents the voltage of the first sub-battery pack during the i-th charging cycle (such as the voltage of the sub-battery pack 11 in FIG. 2 during the i-th charging cycle), and $U_2^i$ represents the voltage of the second sub-battery pack during the i-th charging cycle (such as the voltage of the sub-battery pack 12 in FIG. 2 during the i-th charging cycle).

It should be noted that the 1.5 in Formula 2 represents the corresponding relationship between the charging voltage rise threshold and the voltage difference between the sub-battery packs. This corresponding relationship may be selected based on actual usage requirements, such as 1.3 times, 1.7 times, or 2 times.

Referring to FIG. 2, assuming that the voltage of the sub-battery pack 11 is less than that of the sub-battery pack 12, and in the case that the sub-battery pack 11 is used as the charging sub-battery pack, the switches SP1 and SP2 are controlled to be closed, the switches SP3, SP4, and SS1 are controlled to be opened, and the sub-battery pack 11 is used as the charging sub-battery pack, such that the charging sub-battery pack is charged by the energy storage module. If when the charging rise voltage of the sub-battery pack 11 is greater than or equal to the charging rise voltage threshold, the battery temperature of the target battery pack is still less than the second temperature threshold, and the temperature rise rate of the battery temperature of the target battery pack is still greater than or equal to the rate threshold, the switch SP1, SP2, and SS1 are controlled to be opened, and switches SP3 and SP4 are controlled to be closed, such that the sub-battery pack 12 (i.e., the sub-battery pack other than the sub-battery pack 11) is used as the charging sub-battery pack to charge the energy storage module, thereby realizing charging of the sub-battery pack 11 and the sub-battery pack 12 by the energy storage module in a cyclic manner.

As shown in FIG. 7, the cycling conditions for the energy storage module to charge the sub-battery pack 11 and the sub-battery pack 12 in a cyclic manner is that the battery temperature of the target battery pack is less than the second temperature threshold, and the temperature rise rate of the battery temperature of the target battery pack during the cycling process remains greater than or equal to the rate threshold. In the case that the battery temperature of the target battery pack is greater than or equal to the second temperature threshold, since the temperature of the target battery pack has already met the condition, the self-heating of the target battery pack can be directly terminated. In the case that the temperature rise rate of the battery temperature of the target battery pack is less than the rate threshold, since charging the plurality of sub-battery packs by the energy storage module in a cyclic manner can no longer cause the target battery pack to heat up quickly, the charging of the sub-battery pack 11 and the sub-battery pack 12 in a cyclic manner by the energy storage module can be terminated.

In other words, in the case that the temperature of the target battery pack is greater than or equal to the second temperature threshold, it indicates that the battery temperature of the target battery pack will no longer adversely affect the external charging power of the target battery pack, and thus the self-heating of the target battery pack can be terminated.

In addition, as the energy storage module continues to charge the sub-battery packs in a cyclic manner, the voltage of the energy storage module gradually increases, and the voltage of the sub-battery packs also gradually increases, resulting in a gradual reduction in the voltage difference between the sub-battery packs and the energy storage module. In this case, due to the reduction in voltage difference, the current in the charging circuit weakens, which in turn leads to a decrease in heat generation in the charging circuit and a reduction in the temperature rise rate of the battery temperature of the target battery pack. In the case that the temperature rise rate of the battery temperature of the target battery pack is less than the rate threshold, it indicates that the voltage between the current sub-battery pack and the energy storage module is already relatively close. If the self-heating of the target battery pack continues to be realized in this way, the temperature rise rate of the battery temperature of the target battery pack will only become smaller and smaller. At this time, to improve the self-heating efficiency of the target battery pack, it is necessary to adjust the charging and discharging method between the target battery pack and the energy storage module.

In some embodiments, as shown in FIG. 7, in the case that the battery temperature of the target battery pack is detected to be less than the second temperature threshold and the temperature rise rate of the battery temperature of the target battery pack is detected to be less than the rate threshold, the charge-discharge switch group can be controlled to charge the energy storage module by the plurality of sub-battery packs in a cyclic manner. The detailed content of charging the energy storage module by the plurality of sub-battery packs in a cyclic manner can be referenced from the relevant description in the above-mentioned step (2), and will not be repeated here.

In step 304, during the charge-discharge process between the target battery pack and the energy storage module, the battery temperature of the target battery pack is detected by the detection module.

In step 305, in the case that the battery temperature of the target battery pack is detected to be greater than or equal to the second temperature threshold, the charge-discharge switch group is controlled to realize the disconnection of the charge-discharge circuit between the target battery pack and the energy storage module. The second temperature threshold is greater than the first temperature threshold.

In some embodiments, in the case that the battery temperature of the target battery pack is detected to be greater than or equal to the second temperature threshold, each switch in the charge-discharge switch group can be controlled to be opened, thereby disconnecting the charge-discharge circuit between the target battery pack and the energy storage module.

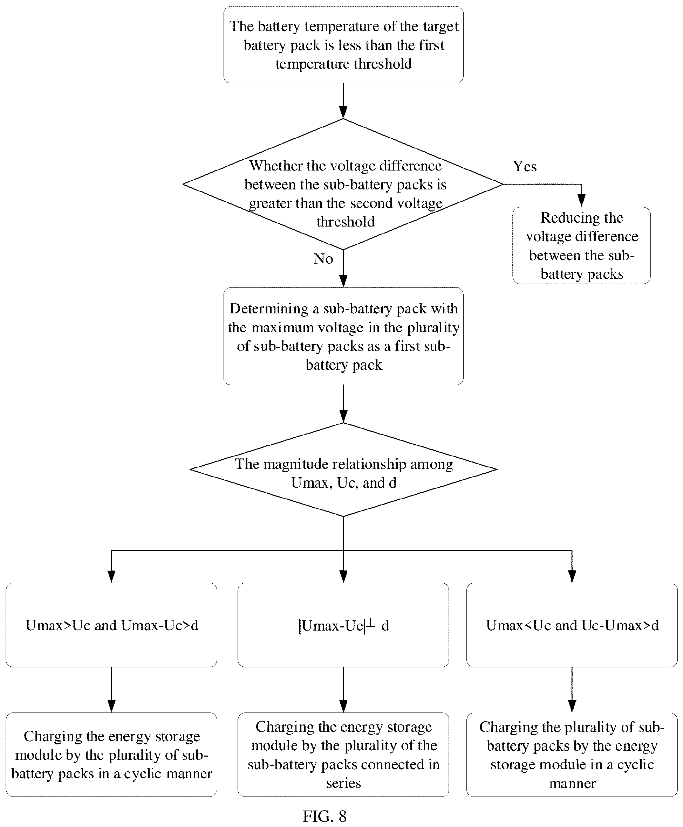

The overall scheme of the embodiments of the present disclosure is introduced below with reference to FIG. 8. As shown in FIG. 8, Umax represents the maximum voltage among the voltages of the plurality of sub-battery packs, i.e., the voltage of the first sub-battery pack; Uc represents the voltage of the energy storage module; and d represents the first voltage threshold. In the case that the battery temperature of the target battery pack is less than or equal to the first temperature threshold, it is first determined whether the voltage difference between the plurality of sub-battery packs in the target battery pack is greater than the second voltage threshold. In the case that the voltage difference between the plurality of sub-battery packs is greater than the second voltage threshold, the voltage difference between the plurality of sub-battery packs can be reduced in the manner shown in FIG. 4 above.

In the case that the voltage difference between the plurality of sub-battery packs is less than or equal to the second voltage threshold, it indicates that the voltage difference between the plurality of sub-battery packs in the target battery pack is small. At this time, the first sub-battery pack with the maximum voltage among the plurality of sub-battery packs can be determined, and based on the relationship between the voltage of the first sub-battery pack and the voltage of the energy storage module, different charging and discharging methods can be executed by opening or closing the plurality of switches.

In the case that the voltage of the first sub-battery pack is greater than the voltage of the energy storage module, and the difference between the voltage of the first sub-battery pack and the voltage of the energy storage module is greater than the first voltage threshold, or in the case that the sub-battery packs are charged by the energy storage module in a cyclic manner and the temperature rise rate of the battery temperature of the target battery pack is less than the rate threshold, the energy storage module can be charged by the plurality of sub-battery packs in a cyclic manner as shown in FIG. 5 above. In the case that the absolute value of the difference between the voltage of the first sub-battery pack and the voltage of the energy storage module is less than or equal to the first voltage threshold, or in the case that the energy storage module is charged by the plurality of sub-battery packs in a cyclic manner and the temperature rise rate of the battery temperature of the target battery pack is less than the rate threshold, the energy storage module is charged by the plurality of sub-battery packs connected in series as shown in FIG. 6 above. In the case that the voltage of the first sub-battery pack is less than the voltage of the energy storage module, and the difference between the voltage of the energy storage module and the voltage of the first sub-battery pack is greater than the first voltage threshold, or in the case that the temperature rise rate of the battery temperature of the target battery pack during the process of charging the energy storage module by the plurality of sub-battery packs connected in series is less than the rate threshold, the plurality of sub-battery packs are charged by the energy storage module in a cyclic manner as shown in FIG. 7 above.

Through the above-mentioned self-heating method, it can be ensured that the temperature rise rate of the battery temperature remains at a relatively high rate before the battery temperature of the target battery pack reaches or exceeds the second temperature threshold, i.e., the battery temperature rises at a relatively high rate, thereby achieving a rapid increase in battery temperature and ensuring the self-heating efficiency of the target battery pack. Furthermore, when the sub-battery packs and energy storage modules perform charging and discharging in a cyclic manner, through the alternating operation of the sub-battery packs, such as a plurality of sub-battery packs alternately charging the energy storage module and the energy storage modules alternately charge the plurality of sub-battery packs, it can be ensured that during the self-heating process of the target battery pack, the voltages of the sub-battery packs alternately rise or fall, keeping the voltage difference between sub-battery packs within the allowable range at all times to ensure the safety and stability of the target battery pack during the self-heating process.

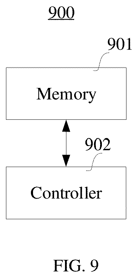

FIG. 9 is a schematic structural diagram of a vehicle according to some embodiments of the present disclosure. The vehicle 900 includes a memory 901 and a controller 902. The memory 901 is used to store a computer program, and the controller 902 is used to execute the computer program stored in the memory 901 to implement the steps of the battery pack self-heating method described above.

The memory 901 may include one or more computer-readable storage media, which may be non-transitory. The memory 901 may also include high-speed random access memory and non-volatile memory, such as one or more disk storage devices or flash storage devices. In some embodiments, the non-transitory computer-readable storage medium in memory 901 is used to store at least one instruction, which is executed by the controller 902 to implement the battery pack self-heating method provided by the embodiments of the present disclosure.

The controller 902 may include one or more processing cores, such as a 4-core processor, an 8-core processor, etc. The controller 902 may be implemented using at least one hardware form among digital signal processing (DSP), field programmable gate array (FPGA), or programmable logic array (PLA). The controller 902 may also include a main processor and a coprocessor. The main processor is a processor used to process data in the wake-up state, also known as a central processing unit (CPU); the coprocessor is a low-power processor used to process data in the standby state. In some embodiments, the controller 902 may include a graphics processing unit (GPU) integrated therein, which is responsible for rendering and drawing the content to be displayed on the display screen. In some embodiments, the controller 902 may also include an artificial intelligence (AI) processor, which is used to perform computational operations related to machine learning.

Those skilled in the art will understand that the structure shown in FIG. 9 does not constitute a limitation on the terminal 900, which may include more or fewer components than shown, combine some components, or adopt a different arrangement of components.

In some embodiments, a computer-readable storage medium is provided. The computer-readable storage medium stores a computer program. When executed by a controller, the computer program implements the steps of the battery pack self-heating method described in the above embodiments. For example, the computer-readable storage medium may be a ROM, RAM, CD-ROM, magnetic tape, floppy disk, or optical data storage device, and the like.

It should be noted that the computer-readable storage medium mentioned in the embodiments of the present disclosure may be non-volatile, i.e., a non-transitory storage medium.

It should be understood that all or part of the steps of the above embodiments may be implemented using software, hardware, firmware, or any combination thereof. When implemented using software, it may be fully or partially implemented in the form of a computer program product. The computer program product includes one or more computer instructions. The computer instructions may be stored in the above-mentioned computer-readable storage medium.

That is, in some embodiments, a computer program product including instructions is also provided. The computer program product, when executed on a computer, causes the computer to perform the steps of the above-mentioned battery pack self-heating method.

It should be understood that the term "at least one" refers to one or more, and "a plurality of" refers to two or more. In the description of the embodiments of the present disclosure, unless otherwise specified, "/" indicates an "or" relationship, for example, A/B can mean A or B; the term "and/or" herein is only a kind of association relationship describing related objects, indicating that there can be three kinds of relationships, for example, A and/or B can mean: A exists alone, A and B exist simultaneously, or B exists alone. In addition, to facilitate a clear description of the technical solutions of the embodiments of the present disclosure, terms such as "first" and "second" are used in the embodiments of the present disclosure to distinguish identical or similar items with essentially the same functions and effects. Those skilled in the art can understand that terms such as "first" and "second" do not limit the quantity or order of execution, and that terms such as "first" and "second" also do not necessarily mean being different.

It should be noted that the information (including but not limited to user device information, user personal information, etc.), data (including but not limited to data used for analysis, stored data, displayed data, etc.), and signals involved in the embodiments of the present disclosure are all authorized by the user or fully authorized by all parties. Moreover, the collection, use, and processing of relevant data need to comply with the relevant laws, regulations, and standards of the relevant countries and regions.

The above descriptions are the embodiments provided by the present disclosure and are not intended to limit the scope of the present disclosure. Any modifications, equivalent replacements, improvements, etc., made within the spirit and principles of the present disclosure should be included within the scope of protection of the present disclosure.

**Claims**

1. A battery pack self-heating system, comprising:

   a target battery pack, comprising a plurality of sub-battery packs and configured to provide electrical energy;
   an energy storage module, configured to store the electrical energy released by the target battery pack and to charge the target battery pack through the electrical energy as stored;
   a charge-discharge switch group, connected between the target battery pack and the energy storage module and configured to control a connection and a disconnection of a charge-discharge circuit between the target battery pack and the energy storage module;

a detection module, connected to both the target battery pack and the energy storage module, and configured to detect a voltage of each sub-battery pack in the plurality of sub-battery packs, a voltage of the energy storage module, and a battery temperature of the target battery pack; and

a control module, connected to both the detection module and the charge-discharge switch group and configured to control the charge-discharge switch group based on voltages of the plurality of sub-battery packs, the voltage of the energy storage module, and the battery temperature of the target battery pack, to realize charge and discharge between the target battery pack and the energy storage module.

2. The system according to claim 1, wherein the charge-discharge switch group comprises a plurality of switches, wherein a positive terminal of each sub-battery pack is connected to an end of a switch, and another end of the switch is connected to one end of the energy storage module; a negative terminal of each sub-battery pack is connected to an end of a switch, and another end of the switch is connected to another end of the energy storage module; and one of the switches is connected between two adjacent sub-battery packs in the plurality of sub-battery packs; and

the control module is configured to control opening or closing the plurality of switches to control a connection and a disconnection of a charge-discharge circuit between a single sub-battery pack in the plurality of sub-battery packs and the energy storage module, or to control a connection and a disconnection of a charge-discharge circuit between a series circuit of the plurality of sub-battery packs and the energy storage module.

3. A battery pack self-heating method, applied to the system as defined in claim 1 or claim 2, and comprising:

acquiring the battery temperature of the target battery pack by the detection module;

acquiring, in a case that the battery temperature of the target battery pack is less than a first temperature threshold, voltages of the plurality of sub-battery packs comprised in the target battery pack and the voltage of the energy storage module by the detection module;

controlling the charge-discharge switch group based on the voltages of the plurality of sub-battery packs and the voltage of the energy storage module to realize the connection of the charge-discharge circuit between the target battery pack and the energy storage module;

detecting, during a charge-discharge process between the target battery pack and the energy storage module, the battery temperature of the target battery pack by the detection module; and

controlling, in a case that the battery temperature of the target battery pack is detected to be greater than or equal to a second temperature threshold, the charge-discharge switch group, to realize the disconnection of the charge-discharge circuit between the target battery pack and the energy storage module, wherein the second temperature threshold is greater than the first temperature threshold.

4. The method according to claim 3, wherein said controlling the charge-discharge switch group based on the voltages of the plurality of sub-battery packs and the voltage of the energy storage module to realize the connection of the charge-discharge circuit between the target battery pack and the energy storage module comprises:

determining a sub-battery pack with a maximum voltage in the plurality of sub-battery packs as a first sub-battery pack;

controlling, in a case that a voltage of the first sub-battery pack is greater than the voltage of the energy storage module and a difference between the voltage of the first sub-battery pack and the voltage of the energy storage module is greater than a first voltage threshold, the charge-discharge switch group to charge the energy storage module by the plurality of sub-battery packs in a cyclic manner;

controlling, in a case that an absolute value of the difference between the voltage of the first sub-battery pack and the voltage of the energy storage module is less than or equal to the first voltage threshold, the charge-discharge switch group to charge the energy storage module by the plurality of sub-battery packs connected in series; and

controlling, in a case that the voltage of the first sub-battery pack is less than the voltage of the energy storage module and the difference between the voltage of the energy storage module and the voltage of the first sub-battery pack is greater than the first voltage threshold, the charge-discharge switch group to charge the plurality of sub-battery packs by the energy storage module in a cyclic manner.

5. The method according to claim 4, wherein the plurality of sub-battery packs comprise two sub-battery packs; and said controlling the charge-discharge switch group to charge the energy storage module by the plurality of sub-battery packs in the cyclic manner comprises:

determining the first sub-battery pack as a discharge sub-battery pack, and determining a discharge loss voltage threshold corresponding to the discharge sub-battery pack based on the voltages of the plurality of sub-battery packs;

controlling switches connected to positive and negative terminals of the discharge sub-battery pack in the charge-discharge switch group to be closed, and other switches to be opened, to charge the energy storage module by the discharge sub-battery pack;

detecting the battery temperature of the target battery pack, a temperature rise rate of the battery temperature of the target battery pack, and a discharge loss voltage of the discharge sub-battery pack by the detection module during a process of charging the energy storage module by the discharge sub-battery pack;

determining, in a case that the battery temperature of the target battery pack is detected to be less than the second temperature threshold, the temperature rise rate of the battery temperature of the target battery pack is detected to be greater than or equal to a rate threshold, and the discharge loss voltage of the discharge sub-battery pack is detected to be greater than or equal to the discharge loss voltage threshold, another sub-battery pack as the discharge sub-battery pack, and returning to a step of determining the discharge loss voltage threshold corresponding to the discharge sub-battery pack based on the voltages of the plurality of sub-battery packs until the battery temperature of the target battery pack is greater than or equal to the second temperature threshold or the temperature rise rate of the battery temperature is less than the rate threshold.

6. The method according to claim 5, wherein after detecting the battery temperature of the target battery pack, the temperature rise rate of the battery temperature of the target battery pack, and the discharge loss voltage of the discharge sub-battery pack by the detection module during the process of charging the energy storage module by the discharge sub-battery pack, the method further comprises:

controlling, in a case that the battery temperature of the target battery pack is detected to be less than the second temperature threshold and the temperature rise rate of the battery temperature of the target battery pack is detected to be less than the rate threshold, the charge-discharge switch group to charge the energy storage module by the plurality of sub-battery packs connected in series.

7. The method according to claim 4 or claim 6, wherein said controlling the charge-discharge switch group to charge the energy storage module by the plurality of sub-battery packs connected in series comprises:

controlling switches on a series circuit of the plurality of sub-battery packs to be closed, and other switches to be opened, to charge the energy storage module by the plurality of sub-battery packs connected in series;

detecting the battery temperature of the target battery pack and the temperature rise rate of the battery temperature of the target battery pack by the detection module during a process of charging the energy storage module by the plurality of sub-battery packs connected in series;

continuing, in a case that the battery temperature of the target battery pack is detected to be less than the second temperature threshold and the temperature rise rate of the battery temperature of the target battery pack is detected to be greater than or equal to the rate threshold, to charge the energy storage module by the plurality of sub-battery packs connected in series until the battery temperature of the target battery pack is greater than or equal to the second temperature threshold or the temperature rise rate of the battery temperature is less than the rate threshold.

8. The method according to claim 7, wherein after detecting the battery temperature of the target battery pack and the temperature rise rate of the battery temperature of the target battery pack by the detection module during the process of charging the energy storage module by the plurality of sub-battery packs connected in series, the method further comprises:

controlling, in a case that the battery temperature of the target battery pack is detected to be less than the second temperature threshold and the temperature rise rate of the battery temperature of the target battery pack is detected to be less than the rate threshold, the charge-discharge switch group to charge the plurality of sub-battery packs by the energy storage module in a cyclic manner.

9. The method according to claim 4 or claim 8, wherein the plurality of sub-battery packs comprise two sub-battery packs; and said controlling the charge-discharge switch group to charge the plurality of sub-battery packs by the energy storage module in the cyclic manner comprises:

determining a sub-battery pack with a minimum voltage in the plurality of sub-battery packs as a second sub-battery pack;

determining the second sub-battery pack as a charging sub-battery pack, and determining a charging rise voltage threshold corresponding to the charging sub-battery pack based on the voltage of the energy storage module and a voltage of the charging sub-battery pack;

controlling switches connected to positive and negative terminals of the charging sub-battery pack in the charge-discharge switch group to be closed, and other switches to be opened, to charge the charging sub-battery pack by the energy storage module;

detecting the battery temperature of the target battery pack, a temperature rise rate of the battery temperature of the target battery pack, and a charging rise voltage of the charging sub-battery pack by the detection module during a process of charging the charging sub-battery pack by the energy storage module;

determining, in a case that the battery temperature of the target battery pack is detected to be less than the second temperature threshold, the temperature rise rate of the battery temperature of the target battery pack is detected to be greater than or equal to the rate threshold, and the charging rise voltage of the charging sub-battery pack is detected to be greater than or equal to the charging rise voltage threshold, another sub-battery pack as the charging sub-battery pack, and returning to a step of determining the charging rise voltage threshold corresponding to the charging sub-battery pack based on the voltage of the energy storage module and the voltage of the charging sub-battery pack until the battery temperature of the target battery pack is greater than or equal to the second temperature threshold or the temperature rise rate of the battery temperature is less than the rate threshold.

10. The method according to claim 9, wherein after detecting the battery temperature of the target battery pack, the temperature rise rate of the battery temperature of the target battery pack, and the charging rise voltage of the charging sub-battery pack by the detection module during the process of charging the charging sub-battery pack by the energy storage module, the method further comprises:

controlling, in a case that the battery temperature of the target battery pack is detected to be less than the second temperature threshold and the temperature rise rate of the battery temperature of the target battery pack is detected to be less than the rate threshold, the charge-discharge switch group to charge the energy storage module by the plurality of sub-battery packs in a cyclic manner.

Target battery pack — 101

Charge-discharge switch group — 103

Detection module — 104

Energy storage module — 102

Control module — 105

FIG. 1

Target battery pack

SP1

Sub-battery pack 11

SP2

SS1

SP3

Sub-battery pack 12

SP4

Energy storage module

FIG. 2

Acquiring the battery temperature of the target battery pack by the detection module — 301

Acquiring, in the case that the battery temperature of the target battery pack is less than a first temperature threshold, the voltages of the plurality of sub-battery packs included in the target battery pack and the voltage of the energy storage module by the detection module — 302

Controlling, based on the voltages of the plurality of sub-battery packs and the voltage of the energy storage module, the charge-discharge switch group to realize the connection of the charge-discharge circuit between the target battery pack and the energy storage module — 303

Detecting, during the charge-discharge process between the target battery pack and the energy storage module, the battery temperature of the target battery pack by the detection module — 304

Controlling, in the case that the battery temperature of the target battery pack is detected to be greater than or equal to the second temperature threshold, the charge-discharge switch group to realize the disconnection of the charge-discharge circuit between the target battery pack and the energy storage module, wherein the second temperature threshold is greater than the first temperature threshold — 305

FIG. 3

Determining the difference between the maximum voltage and the minimum voltage among the voltages of the plurality of sub-battery packs

The difference between the maximum voltage and the minimum voltage is greater than the second voltage threshold

Reducing voltage difference between the sub-battery packs

The magnitude relationship between the maximum voltage and the voltage of the energy storage module

The maximum voltage is greater than the voltage of the energy storage module

The maximum voltage is less than or equal to the voltage of the energy storage module

Charging the energy storage module by the sub-battery pack with the maximum voltage

Charging the sub-battery pack with the minimum voltage by the energy storage module

FIG. 4

Umax＞Uc and Umax-Uc＞d

Charging the energy storage module by the plurality of sub-battery pack in a cyclic manner

Determining the first sub-battery pack as a discharge sub-battery pack

Determining a discharge loss voltage threshold corresponding to the discharge sub-battery pack based on the voltages of the plurality of sub-battery packs

Charging the energy storage module by the discharge sub-battery pack

Whether the battery temperature is greater than or equal to a second temperature threshold

Yes

End

No

Whether the temperature rise rate of the battery temperature is greater than or equal to a rate threshold

No

Charging the energy storage module by the plurality of sub-battery packs connected in series

Yes

When the discharge loss voltage threshold is reached, determining another sub-battery pack as the discharge sub-battery pack

FIG. 5

|Umax-Uc|>d

Charging the energy storage module by the plurality of sub-battery packs connected in series

Charging the energy storage module by the plurality of sub-battery packs connected in series

Whether the battery temperature is greater than or equal to the second temperature threshold

Yes → End

No

Whether the temperature rise rate of the battery temperature is greater than or equal to a rate threshold

Yes

No → Charging the plurality of sub-battery packs by the energy storage module in a cyclic manner

FIG. 6

Umax＜Uc and Uc-Umax＞d

Charging the plurality of sub-battery packs by the energy storage module in a cyclic manner

Determining a sub-battery pack with the minimum voltage in the plurality of sub-battery packs as a second sub-battery pack, and determining the second sub-battery pack as a charging sub-battery pack

Determining a charging rise voltage threshold corresponding to the charging sub-battery pack based on the voltages of the plurality of sub-battery packs

Charging the charging sub-battery pack by the energy storage module

Whether the battery temperature is greater than or equal to the second temperature threshold

Yes → End

No

Whether the temperature rise rate of the battery temperature is greater than or equal to the rate threshold

No → Charging the energy storage module by the plurality of sub-battery packs in a cyclic manner

Yes

When the charging rise voltage threshold is reached, determining another sub-battery pack as the charging sub-battery pack

FIG. 7

The battery temperature of the target battery pack is less than the first temperature threshold

Whether the voltage difference between the sub-battery packs is greater than the second voltage threshold

Yes

Reducing the voltage difference between the sub-battery packs

No

Determining a sub-battery pack with the maximum voltage in the plurality of sub-battery packs as a first sub-battery pack

The magnitude relationship among Umax, Uc, and d

Umax>Uc and Umax-Uc>d

|Umax-Uc|⊥ d

Umax<Uc and Uc-Umax>d

Charging the energy storage module by the plurality of sub-battery packs in a cyclic manner

Charging the energy storage module by the plurality of the sub-battery packs connected in series

Charging the plurality of sub-battery packs by the energy storage module in a cyclic manner

FIG. 8

900

901

Memory

902

Controller

FIG. 9

## INTERNATIONAL SEARCH REPORT

| International application No. |
| --- |
| **PCT/CN2024/094771** |

| A. | CLASSIFICATION OF SUBJECT MATTER |
| --- | --- |

H01M10/615(2014.01)i;  H01M10/63(2014.01)i;  H01M10/44(2006.01)i;  H01M10/48(2006.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS; CNTXT; VEN; ENTXT; WOTXT; EPTXT; CNKI: 电池组, 自加热, 充电, 放电, 储能模块, 温度, 电压, 开关组, battery pack, self-heating, charge, discharge, energy storage module, temperature, voltage, switch group

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117317454 A (CHERY AUTOMOBILE CO., LTD.) 29 December 2023 (2023-12-29) description, paragraphs 4-150, and figures 1-9 | 1-10 |
| Y | CN 115378064 A (CONTEMPORARY AMPEREX TECHNOLOGY CO., LTD.) 22 November 2022 (2022-11-22) description, paragraphs 57-192, and figures 1-19 | 1-3 |
| Y | CN 113733986 A (BYD CO., LTD.) 03 December 2021 (2021-12-03) description, paragraphs 16-93, and figures 2-14 | 1-3 |
| Y | CN 216389527 U (CONTEMPORARY AMPEREX TECHNOLOGY CO., LTD.) 26 April 2022 (2022-04-26) description, paragraphs 30-95, and figures 1-7 | 1-3 |
| A | CN 110168842 A (DYSON TECHNOLOGY LTD.) 23 August 2019 (2019-08-23) entire document | 1-10 |
| A | US 2011305933 A1 (HUANG SHIQING et al.) 15 December 2011 (2011-12-15) entire document | 1-10 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 August 2024** | **27 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/094771** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 211335652 U (BYD CO., LTD.) 25 August 2020 (2020-08-25)<br>    entire document | 1-10 |

Form PCT/ISA/210 (second sheet) (July 2022)

## INTERNATIONAL SEARCH REPORT
### Information on patent family members

International application No.

**PCT/CN2024/094771**

| Patent document cited in search report | | | Publication date (day/month/year) | Patent family member(s) | | | Publication date (day/month/year) |
|---|---|---|---|---|---|---|---|
| CN | 117317454 | A | 29 December 2023 | None | | | |
| CN | 115378064 | A | 22 November 2022 | WO | 2023226567 | A1 | 30 November 2023 |
| | | | | CN | 115378064 | B | 12 December 2023 |
| CN | 113733986 | A | 03 December 2021 | None | | | |
| CN | 216389527 | U | 26 April 2022 | WO | 2023092999 | A1 | 01 June 2023 |
| | | | | KR | 20230079002 | A | 05 June 2023 |
| | | | | EP | 4210151 | A1 | 12 July 2023 |
| | | | | JP | 2024500195 | A | 05 January 2024 |
| | | | | JP | 7469554 | B2 | 16 April 2024 |
| CN | 110168842 | A | 23 August 2019 | EP | 3545604 | A1 | 02 October 2019 |
| | | | | WO | 2018096341 | A1 | 31 May 2018 |
| | | | | GB | 201619969 | D0 | 11 January 2017 |
| | | | | GB | 2556914 | A | 13 June 2018 |
| | | | | US | 2019288528 | A1 | 19 September 2019 |
| | | | | US | 11682914 | B2 | 20 June 2023 |
| | | | | CN | 110168842 | B | 04 June 2024 |
| US | 2011305933 | A1 | 15 December 2011 | TW | 201145761 | A | 16 December 2011 |
| | | | | TWI | 416841 | B | 21 November 2013 |
| | | | | US | 8502502 | B2 | 06 August 2013 |
| CN | 211335652 | U | 25 August 2020 | None | | | |

Form PCT/ISA/210 (patent family annex) (July 2022)

**REFERENCES CITED IN THE DESCRIPTION**

**Patent documents cited in the description**

- CN 202311451281